# EUROPÄISCHE PATENTSCHRIFT

(11) **EP 1 187 865 B1**
(45) Veröffentlichungstag und Bekanntmachung des Hinweises auf die Patenterteilung: **09.11.2005**
(21) Anmeldenummer: 00929367.1
(22) Anmeldetag: 17.04.2000
(51) Int. Cl.: C08G 18/67, C08J 9/00, A47C 27/05, A47G 27/04

(54) **VERFAHREN ZUR HERSTELLUNG VON MATRATZEN, POLSTERUNGEN VON MÖBELN ODER TEPPICHHINTERSCHÄUMUNGEN**
METHOD FOR PRODUCING OF MATRESSES, UPHOLSTERIES FOR FURNITURE OR CARPET BACKINGS
PROCEDE DE PREPARATION DE MATELAS, REMBOURRAGE DE MEUBLES OU SUPPORT DE MOQUETTE

(30) Priorität: 30.04.1999 DE 19919826
(43) Veröffentlichungstag der Anmeldung: 20.03.2002
(73) Patentinhaber: BASF Aktiengesellschaft, 67056 Ludwigshafen (DE)
(72) Erfinder: ARLT, Andreas, D-67273 Weisenheim am Berg (DE); RODEWALD, Dieter, D-49152 Bad-Essen (DE); HORN, Peter, D-69118 Heidelberg (DE); BAUER, Stephan, D-49179 Ostercappeln (DE)
(86) Internationale Anmeldenummer: PCT/EP2000/003466
(87) Internationale Veröffentlichungsnummer: WO 2000/066643

(56) Entgegenhaltungen:
- EP-A- 0 022 336
- EP-A- 0 432 444
- FR-A- 2 167 705

## Beschreibung

Die Erfindung bezieht sich auf Verfahren zur Herstellung von Matratzen, Polsterungen von Möbeln oder Teppichhinterschäumungen durch Umsetzung von Isocyanaten mit gegenüber Isocyanaten reaktiven Verbindungen in Gegenwart von Treibmitteln und gegebenenfalls Katalysatoren, Zusatzstoffen und/oder Hilfsmitteln bzw. Matratzen, Polsterungen von Möbeln oder Teppichhinterschäumungen, enthaltend Produkte der Umsetzung von primären und sekundären Aminen mit α,β-ungesättigte Carbonsäuren, α,β-ungesättigten Carbonsäurederivaten α,β-ungesättigten Ketonen und/oder α,β-ungesättigten Aldehyden.

Die Herstellung von Polyisocyanat-Polyadditionsprodukten, beispielsweise Polyurethanen, die gegebenenfalls Harnstoff und/oder Isocyanuratstrukturen enthalten, durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen, und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von aromatischen Aminen wie z.B. Toluylendiamin (TDA) und Diaminodiphenylmethan (MDA) oder aliphatischen Aminen wie beispielsweise Hexamethylendiamin oder Isophorondiamin.

Wie in Versuchen festgestellt wurde, wird die Aminbildung von einer Reihe von Parametern beeinflußt. Insbesondere hohe Temperaturen ab 80°C in Kombination mit hoher Luftfeuchtigkeit führen zur hydrolytischen Spaltung der Urethan- und Harnstoffbindungen. Derartige Bedingungen sind für einige spezielle Anwendungsgebiete von PUR-Weichschaumstoffen von Bedeutung.

Ein weiterer Parameter, der die Bildung primärer Amine signifikant beeinflußt, ist die Art und Menge der verwendeten Katalysatoren. Wie in diversen Experimenten nachgewiesen werden konnte, katalysieren die in Polyurethansystemen enthaltenen, für die Urethanisierungs- und Treibreaktion notwendigen Katalysatoren, in erheblichem Maße auch die hydrolytische Rückspaltungsreaktion. Die Anwesenheit von Katalysatoren ist somit eine ganz entscheidende Voraussetzung für die Hydrolyse der Urethan- und Harnstoffbindungen. Darüberhinaus konnte gezeigt werden, daß die Effizienz der Hydrolyse in hohem Maße von der Aktivität und der Art des Katalysators abhängig ist, sowie der Tatsache, ob der Katalysator im System verbleibt oder aus dem Material herausmigrieren kann. Insbesondere tertiäre Aminkatalysatoren mit reaktionsfähigen funktionellen Gruppen wie OH-und NH₂ beschleunigen die Aminbildung durch Absenkung der Aktivierungsenergie für die Spaltreaktion erheblich. Die funktionellen Gruppen bewirken den Einbau der Katalysatoren in das entstehende PUR-Netzwerk und die damit hergestellten Produkte weisen den Vorteil geringerer Geruchs- und Foggingproblematik auf, da die Katalysatoren nach der Fertigstellung des PUR-Produktes nicht durch Diffusion entweichen können. Dasselbe gilt für Rezepturen mit Polyolen, die mit primären oder sekundären Aminen als Startmoleküle hergestellt wurden und somit katalytisch aktiv im Schaum vorliegen. Derartige Polyole kommen in jüngster Zeit vermehrt zum Einsatz. Bei Rezepturen mit solchen Bestandteilen, die als Spezialanwendungen besonderen feucht-warmen Bedingungen ausgesetzt sind, kann die Bildung von primären Aminen als Spaltprodukte nicht ausgeschlossen werden. Bei Schaumstoffen mit Aminkatalysatoren, die keine einbaufähigen funktionellen Gruppen enthalten, entweichen diese dagegen in der Regel bereits kurze Zeit nach der Fertigstellung, bzw. bei der Alterung des Schaumstoffes. Bei solchen Schaumstoffen führen feucht-warme Bedingungen zu wesentlich geringeren Amingehalten.

Um speziell bei solchen PUR-Produkten, die feucht-warmen Bedingungen ausgesetzt sind, das Auftreten primärer Amine zu vermindern, war es notwendig, Additive zu finden, die sich mit primären Aminen als Spaltprodukte zu chemisch unbedenklicheren Verbindungen umsetzen. Die Additive sollten dabei die Schäumreaktion nicht wesentlich beeinflussen.

Als Verbindungen, die den Gehalt an primären aromatischen Aminen in Polyurethanweichschaumstoffen vermindern, werden gemäß US 4211847, GB 1565124 und DE-A 2946625 sterisch gehinderte cycloaliphatische Monoisocyanate und Monothioisocyante verwendet. Diese Isocyanate reagieren aufgrund ihrer sterischen Hinderung und der verglichen zu aromatischen Isocyanaten geringeren Reaktivität während der Schäumreaktion nur in geringem Umfang ab, so daß nach Beendigung der Schäumreaktion freies Isocyanat zur Reaktion mit gegebenenfalls vorhandenen aromatischen Aminen zur Verfügung steht. Nachteilig an diesen bekannten Lehren ist, daß die genannten Verbindungen relativ teuer und speziell die beiden zuletzt genannten Verbindungen trotz ihrer sterischen Hinderung zumindest teilweise auch an der Urethanisierungsreaktion beteiligt werden und nicht erst nach der Schäumreaktion mit gebildetem aromatischen Amin reagieren. Zudem neigen diese Isocyanate aufgrund ihres geringen Dampfdrucks dazu, aus dem fertigen Schaum herauszumigrieren und stellen somit eine weitere Gesundheitsgefahr durch Auftreten von freiem Isocyanat dar.

In US 5821292 werden 3-Arylacrylsäureester als Licht-, Oxidations- und Hitzeschutzmittel für organische Polymere beschrieben. Auf eine Verbesserung der hydrolytischen Stabilität und insbesondere eine Reaktion mit primären armomatischen und aliphatischen Aminen wird in dieser Schrift nicht eingegangen.

DE-A 42 32 420 offenbart die Verwendung von α,β-ungesättigten Estercarboxylaten zur Herstellung von Polyurethanschaumstoffen, die eine verbesserte Stauchhärte und Reißdehnung aufweisen. Salze von α,β-ungesättigten Estercarboxylaten werden hierin als Katalysatoren für die NCO/Wasser-Reaktion verwendet. In einem Nebensatz wird beschrieben, daß die Verbindungen aufgrund des Vorliegens von olefinischen Doppelbindungen in Nachbarschaft zu den Carboxylatgruppen zur Addition von Aminogruppen, die während der langsamen Schaumalterung entstehen, befähigt sind. Nachteilig an diesen verbindungen ist ihre katalytische Wirkung, die zu einer Beeinträchtigung der Schäumreaktion führt. Die katalytische Wirkung von Additiven zur Reduzierung der Amingehalte in fertigen PUR-Schäumen ist jedoch nicht erwünscht, da dies wie oben beschrieben zu einer weiteren und beschleunigten Bildung primärer Amine führt. DE 22 00750 A offenbart Thermostabilisatoren zur Stabilisierung von flammhemmenden phosphor- und halogenhaltigen zusätzen bei der Herstellung von Polyurethanschaumstoffen.

Aufgabe der vorliegenden Erfindung war es, Verfahren zur Herstellung von Matratzen, Polsterungen von Möbeln oder Teppichhinterschäumungen, die gegebenenfalls Isocyanurat und/oder Harnstoffstrukturen aufweisen können, durch Umsetzung von Isocyanaten mit gegenüber Isocyanaten reaktiven Verbindungen in Gegenwart von Treibmitteln und gegebenenfalls Katalysatoren, Zusatzstoffen und/oder Hilfsmitteln zu entwickeln, die es ermöglichen, insbesondere durch hydrolytische Spaltung von Urethan- und Harnstoffbindungen entstehende primäre Amine durch eine chemische Reaktion umzusetzen. Insbesondere sollten Additive erfunden werden, die in der Lage sind, den Gehalt an primären, bevorzugt primären aromatischen Aminen in PUR-Weichschaumstoffen zu reduzieren. Die Aminfänger sollten möglichst kostengünstig und leicht verfügbar sein und sollten ihre Wirkung im fertigen Schaum ohne weitere Nachbehandlung entfalten können. Die Verbindungen (i) sollten bevorzugt keinen zu niedrigen Dampfdruck aufweisen, um eine Migration aus dem Schaumstoff zu vermeiden.

Diese Aufgabe konnte dadurch gelöst werden, daß man die Umsetzung in Gegenwart von mindestens einer der folgenden Verbindungen (i) durchführt: α,β-ungesättigte Carbonsäure, α,β-ungesättigtes Carbonsäurederivat, α,β-ungesättigtes Keton und/oder α,β-ungesättigtes Aldehyd.

Aufgrund des erfindungsgemäßen Einsatzes von (i) erreicht man, daß durch eine unerwünschte Spaltung von Urethan- und/oder Harnstoffbindungen gegebenenfalls entstandene freie Aminogruppen durch Reaktion mit den erfindungsgemäßen Verbindungen (i) gebunden werden.

Sowohl primäre als auch sekundäre Amine sind zur Addition an C=C-Doppelbindungen befähigt, insbesondere wenn diese in Nachbarschaft zu einer Carbonylgruppe steht. Die nach Michael benannte Addition des Amins erfolgt dabei an das ungesättigte System, bei dem die π-Elektronen über die Carbonylgruppe hinweg delokalisiert sind. Wie in Experimenten festgestellt wurde, reichen Temperaturen von 70 bis 120°C, wie sie unter feucht-warmen Bedingungen, beispielsweise bei einer Heißdampfsterilisation oder Reinigung mit heißem Dampf vorkommen können, erstaunlicherweise aus, um im PUR-Schaumstoff durch hydrolytische Spaltung von Urethan- und Harnstoffbindungen gebildetes primäres Amin zumindest teilweise mit den erfindungsgemäßen Verbindungen (i) umzusetzen.

Die Verbindungen (i) werden somit in Polyurethanschaumstoffen zur Reaktion mit Aminogruppen. Die Aminogruppen werden durch Addition an die C=C-Doppelbindungen und unter Ausbildung einer kovalenten Bindung an die erfindungsgemäßen α,β-ungesättigten Carbonylverbindungen gebunden. Die Diffusion bzw. Migration von primären Aminen aus den Polyurethanschaumstoffen kann damit erfindungsgemäß vermindert werden. Dies gilt insbesondere, wenn die Verbindungen (i) durch das Vorhandensein von einbaufähigen Gruppen wie OH oder NH₂ in das entstehende Polyurethannetzwerk eingebaut werden. Damit werden nicht nur die Verbindungen (i) fixiert und damit deren Diffusion aus den Polyurethanschaumstoffen verhindert, sondern auch das an die Verbindung (i) gebundene primäre Amin.

Als (i) können allgemein bekannte α,β-ungesättigte Carbonsäuren, α,β-ungesättigte Carbonsäurederivate, α,β-ungesättigte Ketone und/oder α,β-ungesättigte Aldehyde eingesetzt werden.

Bevorzugt sind Verbindungen (i), die das folgende allgemeine Strukturmerkmal aufweisen: 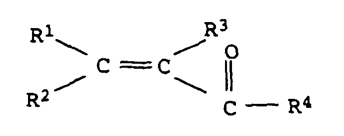 mit den folgenden Bedeutungen für die Reste R1 bis R4:
R¹: H, (C₁-C₁₂)-Alkyl, (C₆-C₂₀)-Aryl,
R²: H, (C₁-C₁₂)-Alkyl, (C₆-C₂₀)-Aryl,
R³: H, (C₁-C₁₂)-Alkyl, (C₆-C₂₀)-Aryl,
R⁴: H, (C₁-C₁₂)-Alkyl, (C₆-C₂₀)-Aryl, -O-(C₁-C₁₂-)-Alkyl, -O-(C₁-C₁₂-)-Alkyl-OH, -(C₁-C₁₂-)-Alkyl-OH, -O-(C₁-C₁₂-)-Alkyl, -(C₁-C₁₂-)-Alkyl-NH₂, -O-(C₁-C₁₂-)-Alkyl-NH₂, -O-Benzyl, -O-Aryl, -O-(C₁-C₁₂-)-Alkyl-COOH, -O-(C₁-C₁₂)Alkyl-CH(OH)-CH₂-O-(CO)-CHCH₂, -O-(C₁-C₁₂-)-Alkyl-O-(CO)-CHCH₂, -O-(C₁-C₁₂)Alkyl-CH(OH)-(C₁-C₁₂)-Alkyl-O-(C₁-C₁₂)Alkyl-O-(C₁-C₁₂)Alkyl-CH(OH)-CH₂-O-(CO) -CHCH₂.

Besonders bevorzugt als (i) sind die folgenden Verbindungen: Acrylsäure, Crotonsäure, Isocrotonsäure, Sorbinsäure, Fumarsäure, Zimtsäure, Hydroxyethylacrylat, 3-(Acryloyloxy)-2-Hydroxypropylmethacrylat, Zimtsäurebenzylester, trans-3-Nonen-2-on, Benzalaceton, Dibenzalaceton, Benzalacetophenon, 1-Methylbenzalacetophenon, Crotonaldehyd, Zimtaldehyd, Methylvinylketon und/oder α,β-ungesättigte Polyesterdiole, hergestellt durch Polykondensation von Maleinsäure, Fumarsäure, Methacrylsäure und/oder Acrylsäure mit oligomeren Diolen wie Butandiol, Diethylenglykol, Propylenglykol, 1,3-Propandiol und/oder Triolen wie Glycerin mit einem Molekulargewichtsfaktor pro Doppelbindung von 150 bis 3000, einer Fuktionalität von 2 bis 6, einer Hydroxylzahl von 20 bis 800 und einer Säurezahl von 0 bis 15.

Insbesondere werden als (i) die folgenden Verbindungen eingesetzt: Hydroxyethylacrylat, 3-(Acryloyl-oxy)-2-hydroxypropylmethacrylat, Trans-3-Nonen-2-on, Zimtsäurebenzyl-ester, Crotonsäure und/oder α,β-ungesättigte Polyesterdiole (A), hergestellt durch Polykondensation von Maleinsäure, Fumarsäure, Methacrylsäure oder Acrylsäure mit oligomeren Diolen wie Butandiol, Diethylenglykol, Propylenglykol, 1,3-Propandiol und/oder Triolen wie Glycerin mit einem Molekulargewichtsfaktor pro Doppelbindung von 150 bis 3000, einer Fuktionalität von 2 bis 6, einer Hydroxylzahl von 20 bis 800 und einer Säurezahl von 0 bis 15.

Neben einer reinen Polykondensation einer α,β-ungesättigten Carbonsäure, bevorzugt Dicarbonsäure mit Diolen und/oder Triolen sind die α,β-ungesättigten Polyesterdiole (A) beispielsweise herstellbar durch Umsetzung von einem mehrwertigen Alkohol (B) mit einer Verbindung (C), die eine Epoxyfunktion und zusätzlich eine gegenüber Alkoholen reaktive funktionelle Gruppe enthält, zu einer Verbindung (D) und Umsetzung dieser Verbindung (D) mit einer a,β-olefinisch ungesättigten Carbonsäure (E) zu der erfindungsgemäßen Verbindung (A) oder durch direkte Umsetzung einer a,β-olefinisch ungesättigten Carbonsäure (E) mit (B) zu einer Verbindung (A). Als Verbindungen (B) kommen mehrwertige, insbesondere zweiwertige Alkohole in Betracht. Vorteilhaft können Alkohole, mit 2 bis 30, vorzugsweise 2 bis 20 C-Atomen, wie Diole, wie 1,2-Ethandiol, 1,2-Propandiol, 1,3-Propandiol 1,4-Butandiol, 1,5-Pentandiol, 1,6-Hexandiol, 1,2-Hexandiol, 1,8-Octandiol, 1,10-Decandiol 2-Methyl-1,3-propandiol 2,2-Dimethyl-1,3-propandiol, 2-Methyl-2-butyl-1,3-propandiol 2,2-Dimethyl-1,4-butandiol, 2,3-Dimethyl-2,3-butandiol, 2-Buten-1,4-diol, 1,2-Cyclohexandiol, 1,4-Cyclohexandiol, 1,3-Cyclohexandiol, Menthol, 1,4-Cyclohexandimethanol, Hydroxypivalinsäureneopentylglykolester, Diethylenglykol, Triethylenglykol, Tetraethylenglykol, Dipropylenglykol, Methyldiethanolamin, wie Triole, wie Glycerin, Trimethylolpropan, 1,2,4-Butantriol, und Alkohole mit mindestens vier Hydroxygruppen, wie Pentaerythritol, Sorbitol, Threitol, Mannitol, Dulcitol oder aromatisch-aliphatische oder aromatisch-cycloaliphatische Diole mit 8 bis 30 C-Atomen, wobei als aromatische Strukturen heterocyclische Ringsysteme oder vorzugsweise isocyclische Ringsysteme wie Naphthalin- oder insbesondere Benzolderivate wie Hydrochinon, 4,4'-Dihydroxybiphenyl, Bisphenol A, zweifach symmetrisch ethoxyliertes Bisphenol A, zweifach symmetrisch propoxyliertes Bisphenol A, höher ethoxylierte oder propoxylierte Bisphenol A-Derivate oder Bisphenol F-Derivate, handelsübliche Polyetherole wie Lupranol®, Pluracol® (Fa. BASF), Systol® (Fa. BASF) (Fa. BASF), Baycoll® (Fa. Bayer), Caradol® (Fa. Shell), Arcol® (Fa. Lyondell), Varanol® (Fa. DOW Chemical), Polypol® (Fa. Polioles), Teracol® (Fa. Enichem), sowie Mischungen solcher Verbindungen in Betracht kommen. Als mit den Hydroxylgruppen von (B) reagierende Stoffe (C) können viele Substanzklassen eingesetzt werden, z.B. epoxidierte Olefine, Glycidylester von gesättigten oder ungesättigten Carbonsäuren, Glycidylether aliphatischer oder aromatischer Polyole oder Epoxyalkylhalogenide. Beispielsweise sind (+)-1-Chloro-2,3-epoxy-2-methyl-propan, (-)1-Chloro-2,3-epoxy-2-methylpropan, (1)-Chloro-2,3-epoxy-2-methyl-propan, insbesondere (+)1-Chloro-2,3-epoxy-propan, (-)-1-Chloro-2,3-epoxy-propan oder (1)-Chloro-2,3-epoxy-propan sowie Mischungen solcher Verbindungen geeignet. Die Umsetzung zu der erfindungsgemäßen Verbindung (D) kann in an sich bekannter Weise vorgenommen werden, wie beispielsweise in C.A. May, Epoxy Resins Chemistry and Technology, Marcel Dekker Inc., New York/Basel, 1988 beschrieben. Derartige Verbindungen sind an sich bekannt. Besonders bevorzugt sind Polyglycidylverbindungen vom Bisphenol-A-Typ und Glycidylether mehrfunktioneller Alkohole, z.B. des Butandiols, des Hexandiols, des Neopentylglycols, des 1,4-Cyclohexandimethanols, des Glycerins und des Pentaerythrits, beispielsweise Epikote 812, Epikote 828 und Epikote 162 der Firma Shell oder Heloxy 68 und Heloxy 107 der Firma Rhöne-Poulenc.
Die Verbindung (D) kann aus der Reaktionsmischung nach bekannten Methoden, z.B. durch Extraktion, Fällung oder Sprühtrocknung, isoliert oder vorteilhaft zur Herstellung der Verbindung (A) eingesetzt werden. Als Verbindung (E) kommen in erster Linie Carbonsäuren der Formel (II) 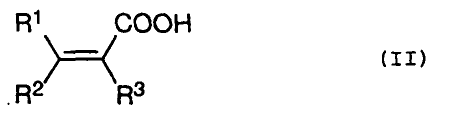 in Betracht, in der R¹, R² und R³ Wasserstoff oder C₁-C₄-Alkylreste darstellen, wobei Maleinsäure, Fumarsäure, Acrylsäure und Methacrylsäure bevorzugt sind. Es können auch Gemische verschiedener solcher Carbonsäuren eingesetzt werden.

Die Umsetzung zu der erfindungsgemäßen Verbindung (A) kann in an sich bekannter Weise vorgenommen werden, vorzugsweise bei 90 bis 130°C, besonders bevorzugt 100 bis 110°C und vorteilhaft so lange, bis das Reaktionsgemisch eine Säurezahl unter 5 mg KOH/g aufweist.

Besonders bevorzugt ist die Umsetzung von (B) mit (E) zu der erfindungsgemäßen Verbindung (A).

Als Katalysatoren für die Umsetzung einer Verbindung (D) mit einer Verbindung (E) können z.B. KOH, quartäre Ammonium- oder Phosphoniumverbindungen, tertiäre Amine, Phosphine wie Triphenylphosphin oder Lewisbasen wie Thiodiglycol eingesetzt werden.

Die Katalysatoren werden bevorzugt in Mengen von 0,01 bis 5, besonders bevorzugt von 0,1 bis 3 Gew.-%, bezogen auf die Verbindung (D), verwendet.

Die Mitverwendung eines Lösungs- oder Verdünnungsmittels ist nicht erforderlich, wird aber bevorzugt.

Geeignete Lösungs- oder Verdünnungsmittel sind Kohlenwasserstoffe, insbesondere Toluot Xylol oder Cyclohexan, Ester, insbesondere Ethylglykolacetat, Ethylacetat oder Butylacetat, Amide, insbesondere Dimethylformamid oder N-Methylpyrrolidon, Sulfoxide, insbesondere Dirnethylsulfoxid, Ketone, insbesondere Methylethylketon oder Cyclohexanon, Ether, insbesondere Diisopropylether oder Methyl-tert.-butylether oder bevorzugt cyclische Ether, insbesondere Tetrahydrofuran oder Dioxan. Die Lösungsmittel oder Verdürmungsmittel können einzeln oder als Gemisch eingesetzt werden.

Zur Vermeidung einer vorzeitigen Polymerisation wird die Umsetzung insbesondere mit Acrylsäure oder Methacrylsäure zweckmäßigerweise in Gegenwart geringer Mengen von Inhibitoren durchgeführt. Dabei kommen die üblichen, zur Verhinderung einer thermischen Polymerisation verwendeten Verbindungen, z.B. vom Typ des Hydrochinons, der Hydrochinorunonoalkylether, des 2,6-Di-tert.-butyl-phenols, der N-Nitrosamine der Phenothiazine oder der Phosporigsäureester in Betracht. Sie werden im allgemeinen in Mengen von 0,005 bis 0,5 Gew.-%, bezogen auf die Verbindung (E), eingesetzt.

Die Verbindung (A) kann aus der Reaktionsmischung nach bekannten Methoden, z.B. durch Extraktion, Fällung, Trocknung oder Sprühtrocknung isoliert werden.

Wie bereits oben erwähnt, führen α,β-ungesättigte Carbonylverbindungen mit zusätzlichen funktionellen Gruppen wie OH und NH₂, die ins PUR-Netzwerk eingebaut werden, zu einer besonders signifikanten Reduzierung der MDA- und TDA-Gehalte. Beispielshaft seien genannt Hydroxyethylacrylat oder 3-(Acryloyl-oxy)-2-hydroxypropylmethacrylat. In ähnlicherweise Weise wirken Polyole mit integrierten C=C-Doppelbindungen in Konjugation zur Carbonylgruppe.

Besonders bevorzugt sind im allgemeinen solche Verbindungen (i), die sich gut in den Isocyanaten oder den gegenüber Isocyanaten reaktiven Verbindungen lösen. Bevorzugt wird (i) in Mischung mit den Isocyanaten eingesetzt.

In dem erfindungsgemäßen Verfahren zur Herstellung der Polyurethanschaumstoffe setzt man (i) bevorzugt in einer Menge von 0,1 bis 20 Gew.-%, besonders bevorzugt 0,5 bis 10 Gew.-%, bezogen auf das Gewicht der Polyurethanschaumstoffe, ein.

Die erfindungsgemäß erhältlichen Polyurethanschaumstoffe weisen den besonderen Vorteil auf, daß gegebenenfalls durch Hydrolyse entstehende primäre Amine, insbesondere primäre aromatische Amine, durch die Verbindungen (i) in eine unbedenkliche Form überführt werden. Die Polyurethanschaumstoffe, insbesondere Matratzen, Polsterungen von Möbeln oder Teppichhinterschäumungen, enthalten somit besonders bevorzugt Produkte der Umsetzung von primären und/oder sekundären Aminen, bevorzugt aromatischen Aminen, mit den dargestellten Verbindungen (i), d.h. den α,β-ungesättigten Carbonsäuren, α,β-ungesättigten Carbonsäurederivaten, α,β-ungesättigten Ketonen und/oder α,β-ungesättigten Aldehyden.

Bevorzugt ist demnach die Verwendung von α,β-ungesättigte Carbonsäuren, α,β-ungesättigten Carbonsäurederivaten, α,β-ungesättiqten Ketonen und/oder α,β-ungesättigten Aldehyden in Polyurethanschaumstoffen mit einem verminderten Gehalt an primären Aminen, insbesondere durch Reaktion der Verbindungen (i) mit den Aminogruppen in den Polyurethanschaumstoffen, demnach die Verwendung von α,β-ungesättigte Carbonsäuren, α,β-ungesättigten Carbonsäurederivaten, α,β-ungesättigten Ketonen und/oder α,β-ungesättigten Aldehyden in Polyurethanschaumstoffen zur Umsetzung mit primären Aminen.

Als Isocyanate kommen in den Verfahren zur Herstellung der Polyurethanschaumstoffe beispielsweise nachfolgend beschriebene Verbindungen in Frage:

Als Isocyanate können die an sich bekannten aliphatischen, cycloaliphatischen, araliphatischen und vorzugsweise aromatischen organischen Isocyanate, bevorzugt mehrfunktionelle, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylen-diisocyanat-1,4, 2-Methylpentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethan-diisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylen-polyoxyethylen-glykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Bevorzugt werden als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat eingesetzt, wobei diese Isocyanate sowohl in beliebigen Mischungen als auch wie bereits beschrieben modifiziert eingesetzt werden können.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyester-amide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyesterpolyolen sowie hydroxylgruppenhaltigen Polyesteramiden, Polyacetalen und/oder Polycarbonaten gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als gegenüber Isocyanate reaktive Verbindungen werden per Definition nur solche behandelt, die nicht unter die Definition von (i) fallen.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bisdimethylamino-di-n-propylamin und/oder 2,2'-Dipiparazin-diisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen in den Mischungen enthalten sein, besonders bevorzugt Triethylendiamin.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Die Ausgangsstoffe für die Herstellung der Matratzen, Polsterungen von Möbeln oder Teppichhinterschäumungen sind beispielhaft bereits beschrieben worden. Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die hierfür verwendeten Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die hierfür verwendeten Polyurethanschaumstoffe können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.

Als vorteilhaft hat es sich erwiesen, die hierfür verwendeten Polyurethanschaumstoffe nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponente zu vereinigen und als B-Komponente die Isocyanate und Katalysatoren und/oder Treibmittel einzusetzen. Die Erfindung soll anhand der folgenden Beispiele dargestellt werden.

### Beispiele

Um Bedingungen, wie sie bei oben erwähnten Spezialanwendungen vorkommen können, zu simulieren, wurde mit Proben nachfolgend genannter Weichschaumstoffe eine Feuchtwärmealterung durchgeführt. Hierzu wurden jeweils Probewürfel der zu testenden Schaumstoffe mit der Kantenlänge 3 cm bei 90°C und 90 % rel. Luftfeuchtigkeit für 72 Stunden im Klimaschrank gealtert. Unter diesen Bedingungen kann es zu einer hydrolytischen Spaltung von Urethan- und Harnstoffbindungen und damit zur Bildung primärer aromatischer Amine kommen. Das gebildete Amin wurde anschließend mittels einer von Prof. Skarping, Universität L und, entwickelten Methode extrahiert. Hierzu wurde der Schaum mit 10 ml Essigsäure (w = 1 Gew.-%) 10 mal ausgequetscht. Die Essigsäure wurde bei zusammengedrückter Schaumprobe in einen 50-ml-Meßkolben überführt. Der Vorgang wurde zwei mal wiederholt und der Meßkolben wurde bis zur Meßmarke mit Essigsäure aufgefüllt. Anschließend wurde der MDA/TDA-Gehalt der vereinigten Extrakte mittels Kapillarelektrophorese mit UV-Detektion bestimmt. Die in der Tabelle angegebenen MDA/TDA-Gehalte entsprechen den Absolutgehalten des gebildeten MDA/TDA im PUR-Schaumstoff.

### Beispiel 1

Herstellung eines Polyurethan-Weichschaumstoffes durch Vermischen von 750 g A-Komponente mit 354 g B-Komponente (Index 90) und Überführen des aufschäumenden Gemisches in eine auf 53°C temperierte Aluminiumform (40 x 40 x 10 cm), wobei sich die Komponenten folgendermaßen aufbauen:

### A-Komponente

97 Teile eines Polyols mit der Hydroxylzahl (OHZ) von 28 mg KOH/g, einer mittleren Funktionalität von 2,3 und einem Ethylenoxid (EO)/ Propylenoxid (PO)-Verhältnis von 14/86,
3 Teile eines Polyols mit der OHZ 42 mg KOH/g, eine mittleren Funktionalität von 3 und einem PO/EO-Verhältnis von 30/70,

| | |
|---|---|
| 3,31 | Teile Wasser, |
| 0,8 | Teile Aminopropylimidazol, |
| 0,6 | Teile Lupragen® N 107, OHZ: 421 (BASF Aktiengesellschaft), |
| 0,5 | Teile Tegostab B 8631 (Goldschmidt). |

### B-Komponente

Mischung aus einem Polymer-MDI mit einem Anteil von 50 % und einem difunktionellem MDI-Gemisch mit einem Anteil von 50 %.

Dieses System beinhaltet als einbaubare Katalysatoren Aminopropylimidazol und Lupragen® N 107 (BASF Aktiengesellschaft). Es wurde ausgewählt, um die besondere Wirksamkeit der zugesetzten Additive bei PUR-Rezepturen mit einbaufähigen Katalysatoren und katalytisch aktiven Spacerpolyolen zu verdeutlichen, wie die deutliche Reduzierung der MDA-Gehalte der Schaumstoffe mit Zusatz von α,β-ungesättigten Carbonylverbindungen verglichen zum Vergleichssystem in der Tabelle 1 zeigt.

**Tabelle 1:**

| Vergleich der MDA-Gehalte von PUR-Weichschaumstoffen ohne (Schaumstoff 1) und mit Zusatz von α,β-ungesättigten Carbonylverbindungen (Schaumstoffe 2 bis 8) | | | | | | | | |
|---|---|---|---|---|---|---|---|---|
| Schaumstoff | 1 | 2 | 3 | 4 | 5 | 6 | 7 | 8 |
| Hydroxyethylacrylat [Gew.-% zu (A)] | - | 10 | - | - | - | - | | |
| 3-(Acryloyl-oxy)-2-hydroxypropyl-methacrylat | - | - | 10 | - | - | - | - | - |
| Laromer® 8765 [Gew.-% zu A] | - | - | - | 10 | - | - | - | - |
| Lupragen® VP 9198 [Gew.-% zu A] | - | - | - | - | 10 | - | - | - |
| Trans-3-Nonen-2-on [Gew.-% zu (A)] | - | - | - | - | - | 9,6 | | |
| Zimtsäurebenzylester [Gew.-% zu (B)] | - | - | - | - | - | - | 7,2 | - |
| Crotonsäureanhydrid [Gew.-% zu (B)] | - | - | - | - | - | - | - | 2 |
| Startzeit [s] | 13 | 15 | 15 | 15 | 20 | 15 | 25 | 20 |
| Gelzeit [s] | 80 | 90 | 95 | 95 | 95 | 85 | 95 | 95 |
| Steigzeit [s] | 100 | 110 | 150 | 115 | 110 | 120 | 120 | 140 |
| 4,4'-MDA [ppm] o.L. | <1 | <1 | <1 | <1 | <1 | <1 | <1 | <1 |
| 2,4'-MDA [ppm] o.L. | <1 | <1 | <1 | <1 | <1 | <1 | <1 | <1 |
| 4,4'-MDA [ppm] m.L. | 397 | 31 | 59 | 55 | 43 | 223 | 155 | 98 |
| 2,4'-MDA [ppm] m.L. | 687 | 86 | 134 | 118 | 105 | 391 | 321 | 184 |
| (A): Zugabe von (i) zur Polyol-Komponente | | | | | | | | |
| (B): Zugabe von (i) zur Isocyanat-Komponente | | | | | | | | |
| o.L.: Extraktion nach Verarbeitung des Schaumstoffes | | | | | | | | |
| m.L.: Extraktion nach Feucht-Wärme-Alterung von 3 Tagen bei 90°C und 90 % rel. Luftfeuchtigkeit im Klimaschrank | | | | | | | | |

Laromer® 8765 (BASF Aktiengesellschaft): OH-gruppenhaltiger Bisacrylsäurester mit einem Molekulargewicht von 346,4 g/mol und einer OHZ-Zahl von 323 mg KOH/g.

Lupragen® VP 9198 (BASF Aktiengesellschaft): α,β-ungesättigtes Polyesterdiol mit einer OH-Zahl von 336 mg KOH/g, einer Säurezahl von 0,7 und einem Molekulargewichtsfaktor pro Doppelbindung von 262, hergestellt durch Polykondensation von Maleinsäureanhydrid, 1,3-Propandiol und Diethylenglykol im Molverhältnis 1:1:1.

### Beispiel 2

Herstellung eines Polyurethan-Weichschaumstoffes, der als Modell für Standardweichschaumstoffe herangezogen wurde, durch Vermischen von 750 g A-Komponente mit 349 g B-Komponente (Index 90) und Überführen des aufschäumenden Gemisches in eine auf 53°C temperierte Aluminiumform (40 x 40 x 10 cm), wobei sich die Komponenten folgendermaßen aufbauen:

### A-Komponente

97 Teile eines Polyols mit der OHZ 28 mg KOH/g, einer mittleren Funktionalität von 2,3 und einem EO/PO-Verhältnis von 14/86,
3 Teile eines Polyols mit der OHZ 42 mg KOH/g, einer mittleren Funktionalität von 3 und einem PO/EO-Verhältnis von 30/70,

| | |
|---|---|
| 3,31 | Teile Wasser, |
| 0,22 | Teile 1,4-Diazabicyclo[2.2.2]octan, |
| 0,14 | Teile Lupragen® N 206 (BASF Aktiengesellschaft), |
| 0,5 | Teile Tegostab B 8631 (Goldschmidt). |

### B-Komponente

Mischung aus einem Polymer-MDI mit einem Anteil von 50 % und einem difunktionellem MDI-Gemisch mit einem Anteil von 50 %.

**Tabelle 2:**

| Vergleich der MDA-Gehalte von PUR-Weichschaumstoffen ohne (Schaumstoff 9) und mit Zusatz von α,β-ungesättigten Carbonylverbindungen (Schaumstoff 10 und 11) | | | |
|---|---|---|---|
| Schaumstoff | 9 | 10 | 11 |
| Hydroxyethylacrylat [Gew.-% zu (A)] | - | 10 | |
| Laromer® 8765 [Gew.-% zu (A)] | - | - | 10 |
| Startzeit [s] | 13 | 15 | - |
| Gelzeit [s] | 45 | 70 | - |
| Steigzeit [s] | 80 | - | - |
| 4,4'-MDA [ppm] o.L. | <1 | <1 | <1 |
| 2,4'-MDA [ppm] o.L. | <1 | <1 | <1 |
| 4,4'-MDA [ppm] m.L. | 32 | 20 | 25 |
| 2,4'-MDA [ppm] m.L. | 78 | 57 | 64 |
| (A): Zugabe von (i) zur Polyol-Komponente | | | |
| (B): Zugabe von (i) zur Isocyanat-Komponente | | | |
| o.L.: Extraktion nach Verarbeitung des Schaumstoffes | | | |
| m.L.: Extraktion nach Feucht-Wärme-Alterung von 3 Tagen bei 90°C und 90 % rel. Luftfeuchtigkeit im Klimaschrank | | | |

### Beispiel 3

Herstellung eines Polyurethan-Weichschaumstoffes durch Vermischen von 750 g A-Komponente mit 275 g B-Komponente (Index 115) und Überführen des aufschäumenden Gemisches in eine offene Form mit einem Volumen von 40 1, wobei sich die Komponenten folgendermaßen aufbauen:

### A-Komponente

| | |
|---|---|
| 100 | Teile Lupranol® 2080 (BASF), |
| 2,65 | Teile Wasser, |
| 0,25 | Teile Lupragen® N 101 (BASF), |
| 0,04 | Teile Lupragen® N 206 (BASF), |
| 0,20 | Teile Zinndioktoat, |
| 0,80 | Teile Silikonstabilisator BF 2370 |

### B-Komponente

### Lupranat® T 80 (BASF)

**Tabelle 3:**

| Vergleich der TDA-Gehalte von PUR-Weichschaumstoffen ohne (Schaumstoff 12) und mit Zusatz von α,β-ungesättigten Carbonylverbindungen (Schaumstoff 13 bis 16) | | | | | |
|---|---|---|---|---|---|
| Schaumstoff | 12 | 13 | 14 | 15 | 16 |
| Hydroxyethylacrylat [Gew.-% zu (A)] | - | 5 | - | - | - |
| 3-(Acryloyl-oxy)-2-hydroxypropyl-methacrylat [Gew.-% zu (A)] | - | - | 5 | - | - |
| Laromer® 8765 (BASF AG) [Gew.-% zu A] | - | - | - | 10 | - |
| Lupragen® VP 9198 (BASF AG) [Gew. -% zu A] | - | - | - | - | 10 |
| 2,4-TDA [ppm] o.L. | <1 | <1 | <1 | <1 | <1 |
| 2,6-TDA [ppm] o.L. | <1 | <1 | <1 | <1 | <1 |
| 2,4-TDA [ppm] m.L. | 31 | 10 | 7 | 9 | 3 |
| 2,6-TDA [ppm] m.L. | 8 | 6 | 4 | 5 | 2 |
| (A): Zugabe von (i) zur Polyol-Komponente | | | | | |
| (B): Zugabe von (i) zur Isocyanat-Komponente | | | | | |
| o.L.: Extraktion nach Verarbeitung des Schaumstoffes | | | | | |
| m.L.: Extraktion nach Feucht-Wärme-Alterung von 3 Tagen bei 90°C und 90 % rel. Luftfeuchtigkeit im Klimaschrank. | | | | | |

Die Nachweisgrenze der kapillarelektrophoretischen Bestimmung beträgt 1 ppm.

Die erfindungsgemäßen Vorteile, d.h. der deutlich gesenkte Gehalt an primären aromatischen Aminen nach einer Lagerung unter feuchtwarmen Bedingungen konnte somit überzeugend nachgewiesen werden.

## Patentansprüche

1. Verfahren zur Herstellung von Matratzen, Polsterungen von Möbeln oder Teppichhinterschäumungen durch Umsetzung von Isocyanaten mit gegenüber Isocyanaten reaktiven Verbindungen in Gegenwart von Treibmitteln und gegebenenfalls Katalysatoren, Zusatzstoffen und/oder Hilfsmitteln, **dadurch gekennzeichnet, daß** man die Umsetzung in Gegenwart von mindestens einer der folgenden Verbindungen (i) durchführt: α,β-ungesättigte Carbonsäure, α,β-ungesättigtes Carbonsäurederivat, α,β-ungesättigtes Keton und/oder α,β-ungesättigtes Aldehyd.

2. Verfahren nach Anspruch 1, **dadurch gekennzeichnet, daß** man als (i) R¹R²-C=CR³COR⁴ einsetzt mit den folgenden Bedeutungen
R¹: H, (C₁-C₁₂)-Alkyl, (C₆-C₂₀)-Aryl,
R²: H, (C₁-C₁₂)-Alkyl, (C₆-C₂₀)-Aryl,
R³: H, (C₁-C₁₂)-Alkyl, (C₆-C₂₀)-Aryl,
R⁴: H, (C₁-C₁₂)-Alkyl, (C₆-C₂₀)-Aryl, -O-(C₁-C₁₂-)-Alkyl, -O-(C₁-C₁₂-)-Alkyl-OH, -(C₁-C₁₂-)-Alkyl-OH, -O-(C₁-C₁₂-)-Alkyl, -O-(C₁-C₁₂-)-Alkyl-NH₂, -(C₁-C₁₂-)-Alkyl-NH₂,-O-Benzyl, -O-Aryl, -O-(C₁-C₁₂-)-Alkyl-COOH, -O-(C₁-C₁₂)Alkyl-CH(OH)-CH₂-O-(CO)-CHCH₂, -O-(C₁-C₁₂-)-Alkyl-O-(CO)-CHCH₂, -O-(C₁-C₁₂)Alkyl-CH(OH)-(C₁-C₁₂)Alkyl-O-(C₁-C₁₂)Alkyl-O-(C₁-C₁₂)Alkyl-CH(OH)-CH₂-O-(CO)-CHCH₂.

3. Verfahren nach Anspruch 1, **dadurch gekennzeichnet, daß** man als (i) Acrylsäure, Crotonsäure, Isocrotonsäure, Sorbinsäure, Fumarsäure, Zimtsäure, Hydroxyethylacrylat, 3-(Acryloyloxy)-2-Hydroxypropylmethacrylat, Zimtsäurebenzylester, trans-3-Nonen-2-on, Benzalaceton, Dibenzalaceton, Benzalacetophenon, 1-Methylbenzalacetophenon, Crotonaldehyd, Zimtaldehyd, Methylvinylketon und/oder α,β-ungesättigte Polyesterdiole, hergestellt durch Polykondensation von Maleinsäure, Fumarsäure, Methacrylsäure und/oder Acrylsäure mit oligomeren Diolen wie Butandiol, Diethylenglykol, Propylenglykol, 1,3-Propandiol und/oder Triolen wie Glycerin mit einem Molekulargewichtsfaktor pro Doppelbindung von 150 bis 3000, einer Funktionalität von 2 bis 6, einer Hydroxylzahl von 20 bis 800 und einer Säurezahl von 0 bis 15, einsetzt.

4. Verfahren nach Anspruch 1, **dadurch gekennzeichnet, daß** man (i) in einer Menge von 0,01 bis 20 Gew.-%, bezogen auf das Gewicht der Polyurethanschaumstoffe, einsetzt.

5. Matratzen, Polsterungen von Möbeln oder Teppichhinterschäumungen erhältlich nach einem Verfahren gemäß Anspruch 1.

6. Matratzen, Polsterungen von Möbeln oder Teppichhinterschäumungen enthaltend Produkte der Umsetzung von primären und/oder sekundären Aminen mit α,β-ungesättigten Carbonsäuren, α,β-ungesättigten Carbonsäurederivaten, α,β-ungesättigten Ketonen und/oder α,β-ungesättigten Aldehyden.

## Claims

1. A process for producing mattresses, upholstery for furniture or foam backing for carpets, by reacting isocyanates with compounds which are reactive toward isocyanates in the presence of blowing agents and in the presence or absence of catalysts, additives and/or auxiliaries, wherein the reaction is carried out in the presence of at least one of the following compounds (i): an α,β-unsaturated carboxylic acid, an α,β-unsaturated carboxylic acid derivative, an α,β-unsaturated ketone and/or an α,β-unsaturated aldehyde.

2. A process according to claim 1, wherein the compound (i) used is R¹R²-C=CR³COR⁴, where
R¹: H, C₁-C₁₂-alkyl, C₆-C₂₀-aryl,
R²: H, C₁-C₁₂-alkyl, C₆-C₂₀-aryl,
R³: H, C₁-C₁₂-alkyl, C₆-C₂₀-aryl,
R⁴: H, C₁-C₁₂-alkyl, C₆-C₂₀-aryl, -O-C₁-C₁₂-alkyl, -O-C₁-C₁₂-alkyl-OH, -C₁-C₁₂-alkyl-OH, -O-C₁-C₁₂-alkyl, -O-C₁-C₁₂-alkyl-NH₂, -C₁-C₁₂-alkyl-NH₂,-O-Benzyl, -O-Aryl, -O-C₁-C₁₂-alkyl-COOH, -O-C₁-C₁₂₋alkyl-CH(OH)-CH₂-O-(CO)-CHCH₂, -O-C₁-C₁₂-alkyl-O-(CO)-CHCH₂, -O-C₁-C₁₂-alkyl-CH(OH)-C₁-C₁₂-alkyl-O-C₁-C₁₂-alkyl-O-C₁-C₁₂-alkyl-CH(OH)-CH₂-O-(CO)-CHCH₂.

3. A process according to claim 1, wherein the compound (i) used is acrylic acid, crotonic acid, isocrotonic acid, sorbic acid, fumaric acid, cinnamic acid, hydroxyethyl acrylate, 3-(acryloyl-oxy)-2-hydroxypropyl methacrylate, benzyl cinnamate, trans-3-nonen-2-one, benzalacetone, dibenzalacetone, benzalacetophenone, 1-methylbenzalacetophenone, crotonaldehyde, cinnamaldehyde, methyl vinyl ketone and/or an α,β-unsaturated polyester diol prepared by polycondensation of maleic acid, fumaric acid, methacrylic acid and/or acrylic acid with oligomeric diols such as butanediol, diethylene glycol, propylene glycol or 1,3-propanediol and/or triols such as glycerol and having a molecular weight factor per double bond of from 150 to 3000, a functionality of from 2 to 6, a hydroxyl number of from 20 to 800 and an acid number of from 0 to 15.

4. A process according to claim 1, wherein (i) is used in an amount of from 0.01 to 20% by weight, based on the weight of the polyurethane foam.

5. Mattresses, upholestery for furniture or foam backing for carpets, obtainable by a process according to claim 1.

6. Mattresses, upholstery for furniture or foam backing for carpets, comprising products of the reaction of primary and/or secondary amines with α,β-unsaturated carboxylic acids, α,β-unsaturated carboxylic acid derivatives, α,β-unsaturated ketones and/or α,β-unsaturated aldehydes.

## Revendications

1. Procédé de fabrication de matelas, de rembourrages de meubles ou de supports de tapis par réaction d'isocyanates avec des composés réactifs vis-à-vis des isocyanates en présence d'agents gonflants et éventuellement de catalyseurs, d'additifs et/ou d'adjudants, **caractérisé en ce qu'**on effectue la réaction en présence d'au moins un des composés suivants (i) : de l'acide carboxylique α, β-insaturé, un dérivé d'acide carboxylique α, β-insaturé, une cétone α, β-insaturée et/ou un aldéhyde α, β-insaturé.

2. Procédé suivant la revendication 1, **caractérisé en ce que**, comme (i), on met en oeuvre [R¹R²-C=CR³COR⁴] avec les significations suivantes :
R¹: H, (C₁-C₁₂)-alkyle, (C₆-C₂₀)-aryle,
R²: H, (C₁-C₁₂)-alkyle, (C₆-C₂₀)-aryle,
R³: H, (C₁-C₁₂)-alkyle, (C₆-C₂₀)-aryle,
R⁴: H, (C₁-C₁₂)-alkyle, (C₆-C₂₀)-aryle, -O-(C₁-C₁₂-)-alkyle, -O-(C₁-C₁₂-)-alkyl-OH, -(C₁-C₁₂-)-alkyl-OH, -O-(C₁-C₁₂-)-alkyle, -O-(C₁-C₁₂-)-alkyl-NH₂, -(C₁-C₁₂)-alkyl-NH₂, -O-benzyle, -O-aryle, -O-(C₁-C₁₂-)-alkyl-COOH, -O-(C₁-C₁₂)alkyl-CH (OH) -CH₂-O-(CO)-CHCH₂, -O-(C₁-C₁₂-)alkyl-O-(CO)-CHCH₂, -O-(C₁-C₁₂)alkyl-CH(OH)-(C₁-C₁₂)alkyl-O-(C₁-C₁₂)alkyl-O-(C₁-C₁₂)alkyl-CH(OH)-CH₂-O-(CO) -CHCH₂.

3. Procédé suivant la revendication 1, **caractérisé en ce que**, comme (i), on met en oeuvre de l'acide acrylique, de l'acide crotonique , de l'acide isocrotonique, de l'acide sorbique, de l'acide fumarique, de l'acide cinnamique, de l'acrylate d'hydroxyéthyle, du méthacrylate de 3-(acryloyloxy)-2-hydroxypropyle, du cinnamate de benzyle, de la trans-3-nonén-2-one, de la benzalacétone, de la dibenzalacétone, de la benzalacétophénone, de la 1-méthylbenzalacétophénone, de l'aldéhyde crotonique, de l'aldéhyde cinnamique, de la méthylvinylcétone et/ou des polyesterdiols α,β-insaturés, préparés par polycondensation d'acide maléique, d'acide fumarique, d'acide méthacrylique et/ou d'acide acrylique avec des diols oligomères, tels que du butanediol, du diéthylèneglycol, du propylèneglycol, du 1,3-propanediol, et/ou des triols, tels que de la glycérine, ayant un facteur de poids moléculaire par double liaison de 150 à 3000, une fonctionnalité de 2 à 6, un indice d'hydroxyle de 20 à 800 et un indice d'acide de 0 à 15.

4. Procédé suivant la revendication 1, **caractérisé en ce qu'**on met en oeuvre (i) en une quantité de 0,01 à 20 % en poids, par rapport au poids des mousses de polyuréthanne.

5. Matelas, rembourrages de meubles ou supports de tapis que l'on peut obtenir suivant un procédé selon la revendication 1.

6. Matelas, rembourrages de meubles ou supports de tapis contenant des produits de la réaction d'amines primaires et/ou secondaires avec des acides carboxyliques α, β-insaturés, des dérivés d'acide carboxylique α, β-insaturé, des cétones α, β-insaturées et/ou des aldéhydes α, β-insaturés.
